# EUROPEAN PATENT APPLICATION

(11) **EP 0 630 066 A1**
(43) Date of publication of application: **21.12.1994**
(21) Application number: 94201565.2
(22) Date of filing: 01.06.1994
(51) Int. Cl.: H01M 10/18, H01M 4/14, H01M 2/22

(54) **Bipolar battery**

(30) Priority: 21.06.1993 US 79029
(71) Applicant: GENERAL MOTORS CORPORATION, Detroit Michigan 48202 (US)
(72) Inventor: Meadows, Clarence Alfred, Muncie, Indiana 47302 (US); Adams, Robert Eugene, Selma, Indiana 47383 (US); Bish, James Robert, Anderson, Indiana 46011 (US)
(74) Representative: Denton, Michael John

(57) **Abstract**

A bipolar battery comprising a plurality of bipolar electrodes stacked together, each bipolar electrode comprising a conductive septum (2) having positive and negative active material on opposite faces thereof. Each electrode has a non-conductive frame (6) formed thereabout, and a mesa-like lattice (8) which is integral with the frame (6), overlays each face of the septum (2) and is defined by an annular shoulder (14a,14b) formed between the border (5) of the lattice (8) and the frame (6). Discrete spacer frames (30) interjacent the electrode frames (6) separate the electrodes from each other and define a region (32) thereabout for retaining electrolyte of the battery. The faces of the spacer frame (30) each include an annular recess (14a,14b) contiguous to an inner rim (33) thereof which receives, in nesting fashion, the mesa-like lattices (8) for interlocking the frames (6,30) together.

## Description

This invention relates to bipolar electric storage batteries of the face-to-face electrode type as specified in the preamble of claim 1, and more particularly to a unique packaging arrangement therefor.

Bipolar batteries employ either one of two types of bipolar electrodes, i.e., face-to-face or side-by-side. Face-to-face type bipolar electrodes, utilise an electrolyte-resistant, impervious, substantially planar conductive septum having a first polarity active material on one face thereof and an opposite polarity active material on an opposite face thereof. The bipolar electrodes are mounted in non-conductive frames and are stacked together so that opposite polarity faces of adjacent bipolar electrodes oppose each other across an electrolyte-filled gap which also contains an electrolyte-permeable, dendrite-suppressing separator (eg, microporous polyethylene, glass mat or microporous PVC). The frames are typically either clamped or adhesively secured together. One such battery is exemplified by US-A-3,728,158 (Poe et al).

It is known for the electrically-conductive septum that separates the opposite polarity active materials of the bipolar electrode to comprise either (1) a thin metal plate (e.g., lead in the case of a Pb-acid battery), (2) an electrically-conductive polymer, or (3) a non-conductive polymer having a plurality of rivet-like conductors embedded therein for electrically communicating one face of the septum to the other. For a number of reasons, the use of solid metal plates is preferred for long-lived, high-power, bipolar batteries. A metal plate septum particularly useful for lead acid batteries is described in our co-pending patent application no corresponding to United States patent application US Serial No 08/079,030 filed concurrently herewith. Other metal or conductive septums are useful with other types of battery systems (eg, alkaline batteries) as is well-known in the art. Two of the problems associated with the commercialisation of face-to-face type bipolar batteries are (1) ensuring that the active material remains in contact with the septum throughout the life of the battery, and (2) manufacturing problems associated with the handling, alignment, assembly and reliable sealing of so many individual components to form the finished battery.

A bipolar battery according to the present invention is characterised by the features specified in the characterising portion of claim 1.

It is an object of the present invention to provide a unique bipolar battery packaging arrangement for face-to-face type bipolar batteries which addresses both the aforesaid problems by providing a conductive septum engaged on its perimeter by a non-conductive frame, and having mesa-like lattices which (1) are integral with the frame inward of its periphery, (2) provide a plurality of active-material-retaining-pockets across the faces of the septum, and (3) are designed and constructed to securely nest within spacer frames positioned between adjacent bipolar electrodes. This and other objects and advantages of the present invention will become more readily apparent from the detailed description thereof which follows.

As a preferred application of the present invention involves Pb-acid storage batteries, the invention will be described in terms thereof, though it is not limited to such batteries. In a Pb-acid bipolar battery, the bipolar electrode comprises a lead plate septum having an adherent, porous coating on at least one face (preferably both faces) thereof for securely anchoring a lead-containing active material thereto. The coating comprises multiple layers of arc-sprayed, lead particles fused to each other, and to the face of the septum, providing a plurality of interconnecting, interstitial pores for anchoring a lead-containing active material (ie, Pb, PbO or PbO₂) to the septum (see patent application no corresponding to US Serial No. 08/079,030 (supra)). The bipolar electrodes are mounted in non-conductive frames, have non-conductive lattices overlaying the faces thereof and are stacked together with spacer frames and monopolar electrodes (i.e., at the ends of the stack) to form a complete bipolar battery. The frames all nest with each other.

More specifically, in accordance with the present invention, there is provided a bipolar battery comprising a stack of bipolar electrodes sandwiched between a pair of monopolar electrodes wherein each bipolar electrode is engaged on its periphery by a non-conductive frame. Each electrode includes a conductive septum dividing the opposite polarity faces one from the other. A pair of non-conductive lattices integral with the frame, and inward of the periphery thereof, overlays the faces of the septum so as to provide a plurality of pockets extending across the faces of the septum for receiving and retaining the active materials of the battery. The lattices are mesa-like in character in that they stand in relief above the opposing faces of the frame and each define a shoulder with the frame, which shoulder circumscribes the respective lattice. After the pockets are filled with appropriate active material, the framed electrodes are stacked together face-to-face with opposite polarity active material on adjacent electrodes opposing one another across an electrolyte-retention region therebetween. The electrolyte-retention region between adjacent electrodes is defined by a discrete spacer frame sandwiched between adjacent bipolar electrodes. The spacer frame has an internal rim defining a central electrolyte-retention region between adjacent electrodes and a pair of faces on opposite sides thereof abutting the electrode frames. An annular recess is provided in each of the faces of the spacer frame contiguous the rim and receives the shoulder surrounding the mesa-like lattice in a nesting relationship therewith. The nestable frames may be sealed one to the other to form the outer housing/casing of the battery, or preferably will be embedded in a polymeric (eg, thermoplastic or thermoset polymer) housing/casing moulded in situ thereabout as described in more detail in our patent application no corresponding to US patent application Serial No 08/079,033 filed concurrently herewith.

Each spacer frame contains at least one opening through one of its sides for admitting electrolyte into the electrolyte-retention region and/or for venting the region of any gases generated therein. The monopolar electrodes in the end cells will preferably each comprise one of the bipolar electrodes having active material applied to only one face thereof. A terminal of the battery preferably will be moulded into the end wall of the battery and will contain tangs projecting therefrom into contact with the unpasted face of the bipolar electrode serving as a monopolar electrode. The tangs are preferably induction-welded to the septum of the monopolar electrode after the battery has been assembled.

The invention will be better understood when considered in the light of the following detailed description of a specific, preferred embodiment thereof which is given hereafter in conjunction with the accompanying drawings in which:
Figure 1 is a front, elevational view of a bipolar electrode in accordance with the present invention;
Figure 2 is a sectioned, side elevational view of the bipolar electrode taken in the direction 2-2 of Figure 1;
Figures 3a, 3b and 3c are views like Figure 2 of alternative embodiments to the frame and lattice shown in Figure 2;
Figure 4 is a magnified view of zone 4 of Figure 2;
Figure 5 is a view like that of Figure 2, but having active material pasted on both sides of the electrode;
Figure 6 is a view like Figure 5, but with active material pasted on only one face of the electrode to form a monopolar electrode;
Figure 7 is a partially sectioned, front, elevational view of an inter-electrode spacing frame;
Figure 8 is a sectional view of the spacing frame taken in the direction 8-8 of Figure 7;
Figure 9 is a front elevational view of an end wall of a bipolar battery;
Figure 10 is a sectional view of the end wall taken in the direction 10-10 of Figure 9;
Figure 11 is a sectional view of the end wall taken in the direction 11-11 of Figure 9;
Figure 12 is an exploded view of a bipolar battery stack;
Figure 13 is a perspective view of a bipolar battery in a separate housing; and
Figure 14 is a sectioned, side view of the bipolar battery taken in the direction 14-14 of Figure 13.

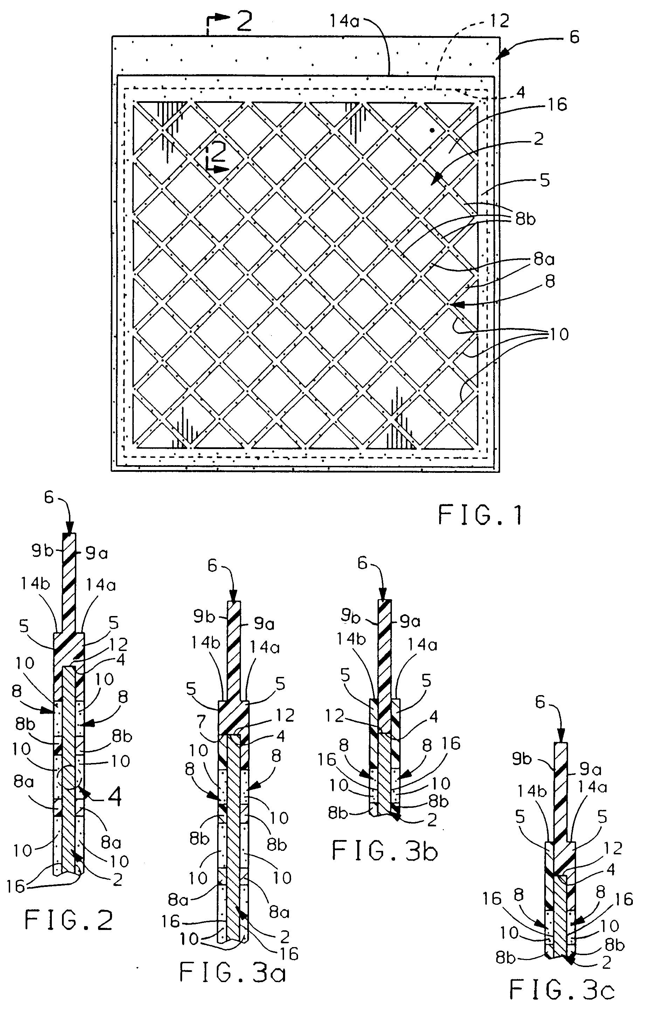

Figures 1-5 depict a bipolar electrode comprising a lead septum plate 2 encompassed by a non-conductive plastics frame 6 having an inner rim 4 engaging the periphery of the plate 2. The frame 6 is preferably insert-moulded about the plate 2, by positioning the plate in a mould and moulding the frame thereabout. Non-conductive (eg, polyolefin) lattices 8 comprising a plurality of criss-crossing lattice wires 8a and 8b define a plurality of pockets 10 overlaying the faces on opposite sides of the septum plate 2. As shown in Figure 2, the lattices 8 may be moulded as one piece with the frame 6 so that borders 5 of the lattices 8 are moulded with the frame 6 around the edge 12 of the plate 2. Alternatively, and as shown in Figures 3a, 3b and 3c, one or both of the lattices 8 may be moulded separately from the frame 6 and subsequently made integral therewith by bonding (eg, heat sealing, ultrasonically bonding or adhesively bonding) thereto. As shown in Figure 3a, the edge 12 of the plate 2 is co-extensive with edges 7 of the borders 5 of the lattices 8, and the frame 6 is then moulded thereabout so as to bond to the edges 7 of the lattices 8 and to become integral therewith. Figures 3b and 3c show other self-evident variations of the junction between the lattice borders 5 and frame 6.

Shoulders 14a and 14b are formed at the junction between the borders 5 of the lattices 8 and the frame 6 and extend completely around the lattices 8. Like mesas, the lattices 8 stand in relief above faces 9a and 9b of the frame 6, and are sized to nest in complementary-shaped recesses formed in a spacer frame (to be described hereinafter) for aligning and interlocking the frames together and preventing lateral shifting thereof with respect to each other, and for providing a sufficiently large interfacial area between abutting frames to achieve a good electrolyte seal therebetween.

In the case of a Pb-acid bipolar battery having a septum comprising a lead plate, a porous coating 16 is provided on at least one face 18 of the septum plate 2, which coating comprises multiple layers of lead particles 20 fused to each other, and to the face 18, so as to define a plurality of interconnecting interstitial pores 22 therebetween. This coating is preferably formed by arc-spraying a plurality of molten lead droplets onto the face 18 of the plate 2 as described in our patent application no corresponding to US Serial No 08/079,030 (supra), filed concurrently herewith.

For the preferred embodiment shown in Figure 2, the septum plate 2 is placed in an appropriate mould, and a plastics material (eg, thermoplastic or thermoset) is injected thereabout to concurrently form the frame 6 and lattice 8 in a single "insert-moulding" operation.

Following mounting in the frame/lattices, an active material 24 having a first polarity, and an active material 26 having a second polarity is spread into the pockets 10 of the lattices 8, and in the case of a Pb-acid battery, pressed into the coating 16 so as to impregnate the pores 22 thereof sufficiently to anchor the active material thereto.

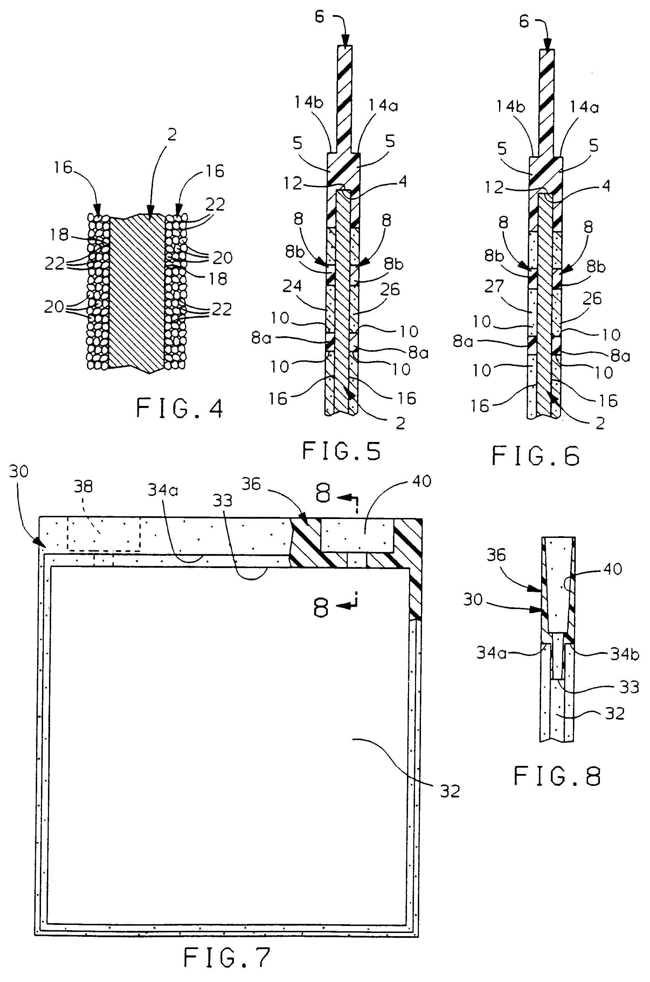

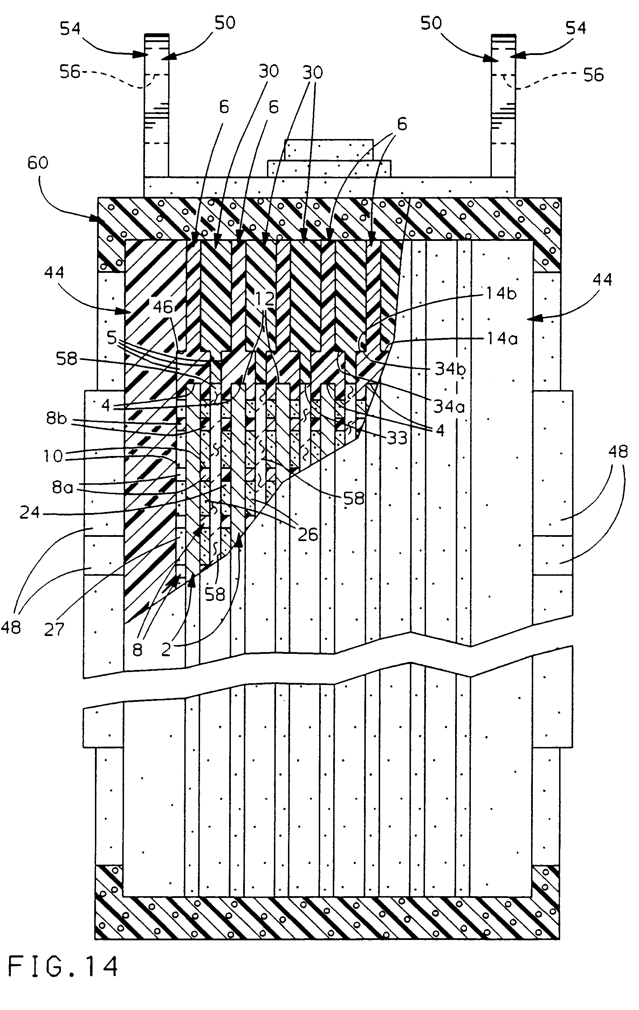

As best shown in Figure 6, one of the "bipolar" electrodes described above may be used as a monopolar electrode (ie, for use in the end cells of the battery) by pasting only one face thereof with active material paste 26. In the end cell, the pasted side 26 will confront an opposite polarity face of any adjacent bipolar electrolyde, whilst an unpasted face 27 will confront an end wall 44 of the battery (see Figure 14). At one end of the battery, the active material paste on the monopolar electrode will comprise positive active material, and at the other end of the battery, the active material paste on the monopolar electrode will comprise negative active material. Alternatively, conventional pasted, grid-type monopolar electrodes mounted in an appropriate frame may be used as the monopolar electrodes in the end cells of the battery.

Figures 7 and 8 depict a spacer frame 30 which, in the finished battery, serves to space one bipolar electrode from the next adjacent electrode (ie, bipolar or monopolar) in the stack, and to define a region 32 between opposing faces of the adjacent electrodes for containing electrolyte of the battery and an interplate separator (eg, compressed gas-recombinant type glass mat 58 (see Figure 14) such as that described in US-A-3,862,861). For convenience of handling and assembly, it is desirable to mould/embed the edges of the separator (eg, glass mat 58) directly into the frame 30 (not shown). The spacer frame 30 contains annular recesses 34a and 34b formed in the faces thereof and contiguous to an inner rim 33, which recesses are sized to receive, in nesting fashion, the shoulders 14a and 14b surrounding the mesa-like lattices 8. An upper side 36 of each of the spacer frames 30 includes openings 38 and 40 for admitting electrolyte into the respective regions 32 and/or for venting the regions as may be required after the stack of electrodes has been assembled. A single such opening may be used in lieu of two openings.

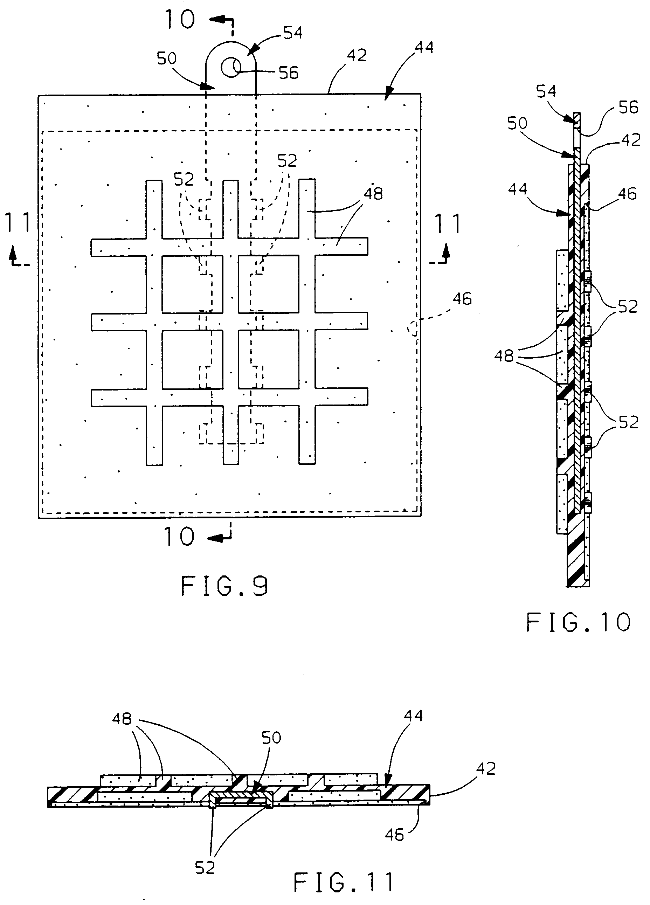

Figures 9-11 depict an end wall 44 of a bipolar electrode stack of a battery. The wall 44 comprises a non-conductive (eg, thermoplastic or thermoset plastics) material having an annular recess 46 therein adapted to receive a shoulder 14a or 14b on one of the monopolar electrodes discussed above (see Figure 6). A plurality of criss-crossing ribs 48 on the outside of the wall 44, opposite the recess 46, stiffens the end wall 44 and prevents bulging thereof under pressure. A metal blade 50, having a plurality of tangs 52 projecting outwardly therefrom into the end cell of the battery, is insert-moulded into the wall 44 and extends beyond a peripheral edge 42 thereof to form a terminal 54 for the battery. The terminal 54 has an appropriate aperture 56 adapted to receive a bolt, or the like, for connecting to an external electrical circuit. The tangs 52 projecting from the blade 50 extend into contact with the unpasted face 27 of the septum plate 2 and are induction-welded thereto after the stack has been assembled. The blade 50 will preferably comprise Sn-coated or Pb/Sn-coated copper wherein the Sn or Pb/Sn coating promotes bonding of the blade 50 to the plastics material forming the wall 44, and facilitates induction-welding of the blade 50 to the septum plate 2. Any conductive, corrosion-resistive metal, eg, titanium, can be used in place of copper.

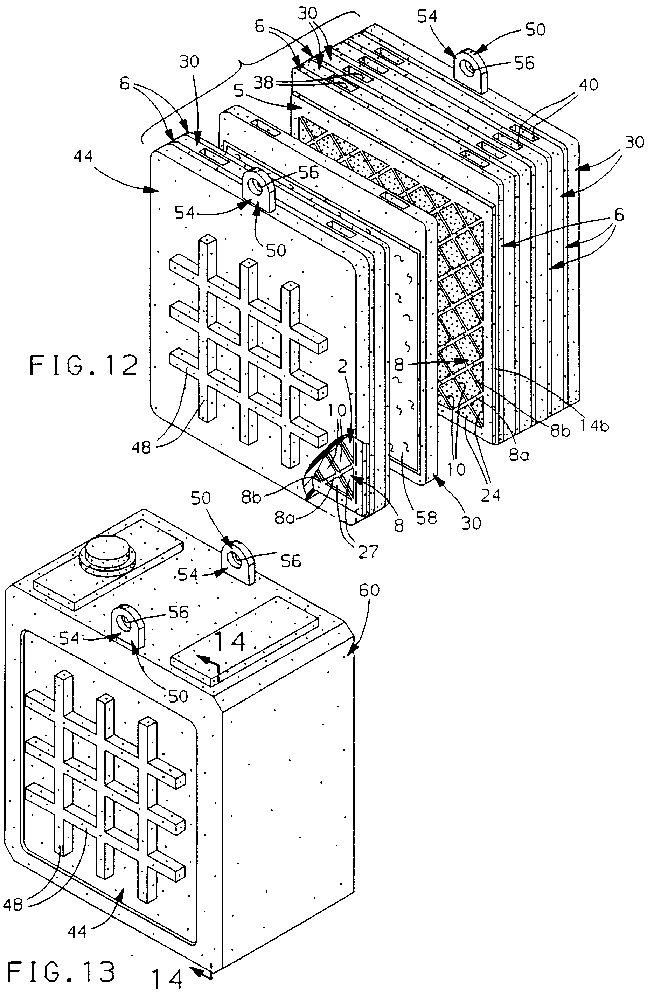

Figures 12-14 show a preferred embodiment of a bipolar electrode stack before and after encasement in a separate housing. Figure 12 shows how the end walls 44 and the electrode and spacer frames nest one within the other to form a bipolar electrode stack. When fully nested within the spacer frames, the electrode frames 6 abut, face-to-face, the spacer frames 30 providing a relatively high interfacial sealing area therebetween and a tortuous path for electrolyte attempting to escape from the electrolyte regions 32 via the interfaces between frames. Figure 12 also shows a microporous glass mat separator 58 positioned within the spacer frame 30.

In accordance with a most preferred embodiment, the assembled stack is positioned in an appropriate mould and molten plastics material (eg, thermoplastic or thermoset) is injected thereabout to form an outer housing 60 which embeds the frames, holds them together (see Figure 13) in a leak-tight fashion and shapes the outer surface of the housing. The injected plastics material will preferably contain about 20% by weight of a foaming agent (eg, F-CL Foaming Agent sold by Wilson Fiberfill International, USA) and is injected under low pressure about the stack. At temperatures in excess of 177°C (350°F) the foaming agent produces CO, CO₂ and ammoniacal foaming gases which expand and foam the plastics material to completely fill the mould cavity without subjecting the stack to the high injection-moulding pressures otherwise required to fill the mould cavity with the plastics material. Alternatively, the frames may be clamped together, or sealingly bonded (ie, glued) one to the next to form the outer case/housing from the frames themselves.

While the invention has been disclosed primarily in terms of specific embodiments thereof, the scope of the present invention is not intended to be limited thereto, but rather only to the extent set forth hereafter in the scope of the claims which follow.

The disclosures in United States patent application no. 079,029, from which this application claims priority, and in the abstract accompanying this application are incorporated herein by reference.

## Claims

1. A bipolar battery comprising a stack of bipolar electrodes, each comprising a substantially planar, electrolyte-impervious, electrically-conductive septum (2) having a positive polarity face (18) and a negative polarity face (18) on opposite sides thereof; a monopolar electrode at each end of said stack; and terminal means (50,52,54) engaging said monopolar electrodes for electrically connecting said battery to external electrical circuitry, characterised in that said battery includes a non-conductive electrode frame (6) engaging the periphery of each of said bipolar electrodes; a pair of mesa-like, non-conductive lattices (8) integral with, and on opposite sides of, said electrode frame (6), said lattices (8) each laying inward of the periphery of, and standing in relief from, said electrode frame (6) so as to overlay and to provide a plurality of pockets (10) extending across said respective face (18); a shoulder (14a,14b) formed between said frame (6) and each of said lattices (8) and surrounding said respective lattice (8); active material (24,26) filling said pockets (10); discrete spacer frames (30) interposed between said electrode frames (6) for spacing said electrodes from each other, said spacer frames (30) each having a pair of faces on opposite sides thereof confronting said respective electrode frames (6), and an internal rim (33) defining an electrolyte retention region (32) between adjacent electrodes in said stack; and an annular recess (34a,34b) in each of said faces of said spacer frames (30) contiguous to said rim (33) which receives a respective shoulder (14a,14b) so that a respective lattice (8) nests within said spacer frame (30).

2. A bipolar battery according to claim 1, in which said frames (6,30) are sealed one to the other to form a housing for the battery.

3. A bipolar battery according to claim 1, in which said stack of bipolar electrodes is contained in a separate housing (60).

4. A bipolar battery according to claim 1, in which said terminal comprises a metal blade (50) embedded in an end wall (44) of the stack, said blade (50) having at least one tang (52) projecting out of said end wall (44) and fused to a respective monopolar electrode.

5. A bipolar battery according to claim 4, in which said monopolar electrode comprises a conductive metal plate (2) having active material (26) on only one face thereof and said tang (52) is fused to the opposite face (27) thereof.

6. A bipolar battery according to claim 5, in which said tang (52) is fused to said opposite face (27) by induction-welding after said stack has been formed.

7. A bipolar battery according to claim 1, in which each of said spacer frames (30) embeds the peripheral edges of a microporous, dendrite-suppressing, interelectrode separator (58) positioned in said region (32).

8. A bipolar battery according to claim 1, in which each of said spacer frames (30) has at least one opening (38,40) therein for admitting electrolyte into said region (32).

9. A bipolar battery according to claim 1, in which each of said spacer frames (30) has at least one opening (38,40) therein for venting gases from said region (32).
